# EUROPEAN PATENT APPLICATION

(11) **EP 4 585 487 A1**
(43) Date of publication of application: **16.07.2025**
(21) Application number: 23863342.4
(22) Date of filing: 26.07.2023
(51) Int. Cl.: B61B 13/10, F16L 55/02

(54) **TUBE VIBRATION DAMPING STRUCTURE**

(30) Priority: 08.09.2022 KR 20220114183
(71) Applicant: POSCO Co., Ltd, Pohang-si, Gyeongsangbuk-do 37859 (KR)
(72) Inventor: CHO, Woo-Yeon, Incheon 21985 (KR)
(74) Representative: Meissner Bolte Partnerschaft mbB
(86) International application number: PCT/KR2023/010804
(87) International publication number: WO 2024/053861

(57) **Abstract**

The present invention relates to a tube vibration damping structure that effectively controls vibration occurring in the circumferential direction in a tube in which an ultra-high-speed vehicle travels. The tube vibration damping structure according to an embodiment of the present invention comprises: a vehicle travel tube having a low pressure formed therein; external rings mounted outside of the tube; and at least one damping member disposed between the external rings and the tube.

## Description

### Technical Field

The present disclosure relates to a tube vibration damping structure that effectively controls circumferential vibrations occurring in a tube in which a vehicle moves.

### Background Art

In general, ultra-high-speed train systems, for speeds over 300 km/h, have to solve two resistances depending on the speed. First, an aerodynamic vehicle is designed to reduce exponentially increasing air resistance, and second, a magnetic levitation system is introduced to reduce frictional contact between a vehicle and a track.

However, since the Hyperloop system, an ultra-high-speed vacuum tube formed by adopting the existing atmospheric pressure of 1 atm to a sealed tube at 0.001 atm, the level of the stratosphere 50 km above the ground, was introduced into the Hyperloop alpha concept, various attempts have been made to actually implement the system.

In these attempts, the system that levitates and propels the system electromagnetically and mechanically is important, but it is also important to implement a tube structure maintaining a sub-vacuum state of about 0.001 atm in the infrastructure accounting for more than 50% of the initial investment cost.

The tube structure is a passageway through which a vehicle carrying passengers or cargo moves therein, so the tube structure is set to be larger than a cross-sectional area of the vehicle, and a blockage ratio, which is generally expressed as a cross-sectional area of the vehicle compared to the cross-sectional area of the tube, is shown to be 0.38 to 0.60. In the Hyperloop Alpha Concept proposed in 2012, a vehicle diameter was 1.38 m and a tube diameter was 2.23 m, showing a blockage ratio of 0.38. However, since a vehicle diameter of 1.38 m is too low for a passenger to stand up in, which is disadvantageous for passenger boarding, recent approaches, such as Virgin Hyperloop One, show a trend toward larger vehicle diameters of 2.4 m and tube diameters of 3.66 m.

In order to reduce frictional resistance, one of driving resistances, a magnetic levitation system is commonly used inside the tube. Since magnetic levitation is maintained by suction, it is very important to maintain a constant gap between a guide rail and the vehicle by precisely converting attraction and repulsion of the magnetic field periodically.

However, since the gap with the guide rail acts as a certain irregularity, a considerable amount of vibration occurs as a speed of the vehicle, so it is essential to control the generated vibration.

(Patent Document 1) Korean Application Publication No. 10-2021-0152184 (Published on December 15, 2021)

### Summary of Invention

### Technical Problem

An aspect of the present disclosure is to provide a tube vibration damping structure capable of effectively controlling circumferential vibrations when a vehicle is driving inside a tube.

### Solution to Problem

In order to achieve the above purpose, the present disclosure provides a tube vibration damping structure formed as follows.

According to an aspect of the present disclosure, a tube vibration damping structure includes: a tube for moving a vehicle in which a low pressure is formed; an external ring installed on the outside of the tube; and one or more damping members arranged between the external ring and the tube.

In the tube vibration damping structure, the external ring may have a through-hole penetratingly formed in a thickness direction, the damping member may be formed with a fixing recess formed in the thickness direction on a surface close to the external ring, and a fixing member coupled to the through-hole and the fixing recess on the outside of the external ring may be further included.

The tube vibration damping structure may further include: an auxiliary member located between the external ring and the damping member.

### Advantageous Effects of Invention

According to an aspect of the present disclosure, when a vehicle runs at high speed inside a hyperloop tube through the structure described above, a constant gap between the guide rail located inside the tube and the vehicle, thereby providing an effect of stably maintaining the magnetic levitation system.

### Brief Description of Drawings

FIG. 1 is a perspective view of a tube vibration damping structure according to an embodiment of the present disclosure.
FIG. 2 is a side view of a tube vibration damping structure according to an embodiment of the present disclosure.
FIG. 3 is an exploded view of a portion of a tube vibration damping structure according to an embodiment of the present disclosure.
FIG. 4 illustrates an external ring of a tube vibration damping structure according to an embodiment of the present disclosure, in which (a) is a side view and (b) is a front view.
FIG. 5 illustrates experimental results of a frequency and damping degree of each vibration mode for a general tube and a tube based on a tube vibration damping structure according to the present disclosure.
FIG. 6 illustrates experimental results of a frequency and damping degree of each vibration mode according to modes for a general tube and a tube based on a tube vibration damping structure according to the present disclosure in which FIG. 6a illustrates the results for Rayleigh Mode and Love Mode, and FIG. 6b illustrates the results for Breathing Mode and the Bending Mode.

### Best Mode for Invention

Hereinafter, embodiments of the present disclosure will be described in detail with reference to the accompanying drawings. The disclosure may, however, be exemplified in many different forms and should not be construed as being limited to the specific embodiments set forth herein, and those skilled in the art and understanding the present disclosure may easily accomplish retrogressive inventions or other embodiments included in the scope of the present disclosure by the addition, modification, and removal of components within the same scope, but those are construed as being included in the scope of the present disclosure.

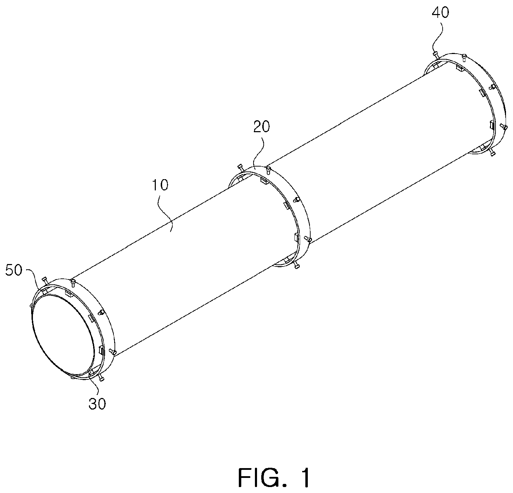

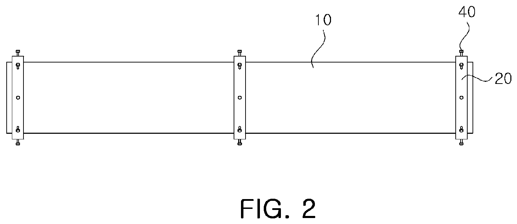

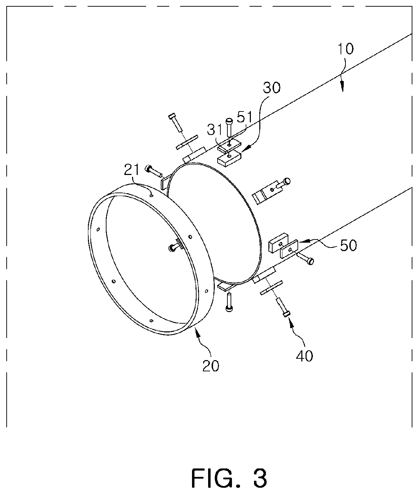

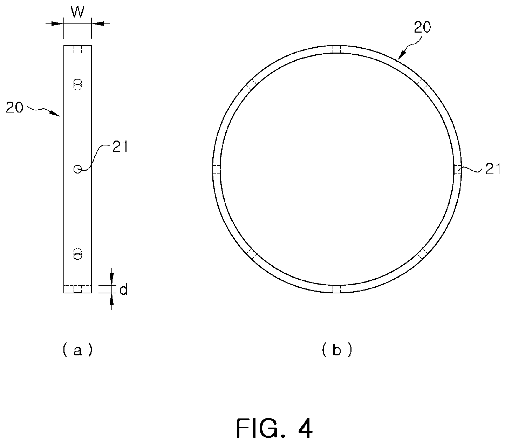

FIG. 1 is a perspective view of a tube vibration damping structure according to an embodiment of the present disclosure. FIG. 2 is a side view of a tube vibration damping structure according to an embodiment of the present disclosure. FIG. 3 is an exploded view of a tube vibration damping structure according to an embodiment of the present disclosure, in which only a portion thereof is illustrated. FIG. 4 is a view of an external ring according to an embodiment of the present disclosure. (a) is a side view, and (b) is a front view.

The tube vibration damping structure according to the present disclosure includes a tube 10, an external ring 20, and a damping member 30. In addition, a fixing member 40 and an auxiliary member 50 may be further included.

The tube 10 according to the present disclosure is formed so that a low pressure is formed therein and a moving body moves therein.

A low pressure is formed inside the tube 10. When the pressure outside the tube 10 is 1 atm (approximately 101 kPa, 1 bar), low pressure refers to pressure inside the tube which is less than 10 kPa (0.1 bar) and may be a pressure close to vacuum.

Examples of low pressure include 1 kPa (0.01 bar or 10 mbar), 500 Pa (5 mbar), 200 Pa (2 mbar), or 100 Pa (1 mbar). In addition, lower pressures may also be included.

The following description will be based on approximately 100 Pa (1 mbar), which is 0.001 atm, but all low pressure cases mentioned above may also be included.

When exposed to a sub-vacuum or near-vacuum state, a phenomenon, such as blowholes and surface peeling, may occur as gas trapped in the tube is released, and thus, the tube may be formed of a material with a low outgassing rate to prevent such a phenomenon.

The material of the tube 10 may be concrete, a polymer composite material, steel, etc. In particular, steel has excellent yield strength and tensile strength characteristics and has excellent outgassing rate at about 0.001 atm, so steel may be used as a material of the tube 10.

The external ring 20 may be installed on the outside of the tube 10.

In order to increase a damping ratio of the tube 10, the external ring 20 is installed along a circular cross-section of the tube on the outside of the tube 10. The external ring 20 may be formed of steel. The external ring 20 may be formed of various materials, but like the tube 10, the external ring 20 may be formed of steel and may act as a mass in the tube structure.

One or more external rings 20 according to an embodiment of the present disclosure may be provided. Also, the external ring 20 may be located at the center and both end portions of the tube 10.

In a case in which one external ring is provided, the external ring may be located only at the center or at least at one of the two end portions of the tube. The external ring may be located only at both end portions or may be located at the center and one of both end portions, so that the external rings may be located at two portions. Also, the external rings may be located in all three portions, i.e., both end portions and the center.

That is, the external ring 20 may be installed as a combination of one to three selected positions among the center, the first end portion, and the second end portion of the tube 10.

When the external ring 20 is located, it acts as a mass at the corresponding portion, so that the magnitude of the displacement caused by vibrations that occur when the vehicle moves inside the tube may be effectively reduced. Therefore, the external ring 20 may be located on the outside of the tube 10 and may serve as a reinforcing structure to prevent vibrations, while acting as a mass.

The external ring 20 may be installed on the outside of the tube 10 and spaced apart from the tube 10. For example, the external ring 20 may be installed to be spaced apart by a distance of 3 to 5% of the outer diameter of the tube 10.

The external ring 20 may be installed to be spaced apart by a certain distance from the tube 10, and the damping member 30 described below may be located in the space therebetween.

If the external ring 20 is spaced apart from the tube 10 by more than the certain distance, damping efficiency may decrease and the circumference of the external ring 20 may increase. Therefore, considering the damping efficiency and the circumference of the external ring 20, a distance by about 3 to 5% of the outer diameter of the tube 10 may be formed.

However, the distance is not limited thereto, and the tube 10 and the external ring 20 may be spaced apart from each other such that the tube 10, the damping member 30 to be described below, and the external ring 20 form a stack structure.

A thickness of the external ring 20 according to an embodiment of the present disclosure is not specified but may be formed to be thicker than a thickness of the tube 10. As an example, the thickness d external ring may be 2 to 4 times the thickness of the tube 10.

The local stiffness and relative displacement may be controlled by adjusting the thickness d of the external ring based on the thickness of the tube 10. When the thickness d of the external ring is maintained at 2 to 4 times the thickness of the tube 10, the local stiffness may become greater and the relative displacement control by the external ring 20 may be effectively performed.

However, without being limited to the thickness mentioned above, the thickness may vary depending on the design of the external ring 20 and the vibration damping structure.

A width W of the external ring is formed to be smaller than a length of the tube 10 based on the entire length of the tube 10. As an example, the width W of the external ring may be formed to be 2 to 5% of the entire length of the tube 10.

The external ring may be formed with a constant width so that the damping member 30 described below may be stably located and may perform damping efficiently. The width W of the external ring may be set to vary depending on the design and is not limited to the aforementioned value.

The external ring 20 is not limited to the shape mentioned above, may be installed along the circumference of the outer side of the tube 10, and may include all external rings 20, such as a polygonal ring-shaped member with a triangular or square cross-section, a ring-shaped member with at least a portion open, or a ring-shaped member with at least a portion protruding or depressed.

At least one damping member 30 is provided between the external ring 20 and the tube 10. Also, when a plurality of damping members are arranged, the plurality of damping members may be arranged, while maintaining a certain interval in a circumferential direction. When a plurality of damping members are arranged, even if a certain interval is not maintained, the arrangement interval may vary depending on the design, and arrangement, such as vertical symmetry or horizontal symmetry may be possible. Without being limited to the arrangement mentioned above, the damping member 30 may be provided between the external ring 20 and the tube 10.

The damping member 30 may be located between the external ring 20 and the tube 10 to fill a gap therebetween and effectively control even a small change in displacement.

The damping member 30 may be formed in the shape of a rectangular solid having a height lower than a width thereof, but is not limited to the shape described above.

The damping member 30 may be formed between the external ring 20 and the tube 10 and may serve to damp vibrations generated in the tube 10.

The external ring 20 may be formed of a member having a relatively high strength and relatively low elasticity. For example, the external ring 20 may be formed of steel. In contrast, the damping member 30 may be formed of an elastic material and a high-viscosity material. The damping member 30 may be formed as an elastic body, and the elastic material and the high-viscosity material may be uniformly or irregularly mixed inside and formed as a single body.

However, the damping member 30 is not limited to a specific shape or material and includes all components that may act as a damper between the tube 10 and the external ring 20.

The elastic modulus of the damping member 30 according to an embodiment of the present disclosure may be less than the elastic modulus of the tube. As an example, the elastic modulus may be 0.001 to 0.01 times that of the tube 10.

The elastic modulus of the damping member 30 may be reduced by 0.001 to 0.01 times that of the tube 10 so that elastic displacement may occur relatively easily, compared to the tube 10. When formed in this manner, energy may be easily absorbed and vibrations may be effectively controlled.

The loss factor of the damping member 30 according to an embodiment of the present disclosure may be 100 to 200 times the loss factor of the tube 10.

The loss factor is a measure of inherent damping of a material when the material is dynamically loaded, and generally represents the ratio of energy dissipated per unit volume per vibration radian to the maximum deformation energy per unit volume.

The material of the damping member 30 may be determined so that the loss factor of the damping member 30 is 100 to 200 times greater than the loss factor of the tube 10. As described above, when the loss factor is 100 to 200 times greater and vibrations are transmitted to the damping member 30, a damping effect may be rapidly generated.

The strength of the damping member 30 according to an embodiment of the present disclosure may be less than the strength of the external ring 20. For example, the strength of the damping member 30 may be formed to be 0.01 to 0.1 times the strength of the external ring 20.

Unlike the external ring 20, the damping member 30 is an easily replaceable member, so the damping member 30 may be formed to be less than the strength of the external ring 20 and may be formed to be 0.01 to 0.1 times the strength of the external ring 20. However, since the damping member 30 is a replaceable component, the strength is not limited when this is taken into consideration.

The damping member 30 may be located between the external ring 20 and the tube 10, while acting as a damper, and the strength is intended to satisfy the characteristics of not being easily damaged while acting as a damper, so it is not limited to the aforementioned strength.

In addition, in a case in which a plurality of damping members 30 according to an embodiment of the present disclosure are arranged, the plurality of may be arranged at regular or irregular intervals in the circumferential direction but may be configured so that the sum of the areas in which the damping members 30 meet the tube 10 in a state in which the damping members 30 are arranged is 0.3 to 1.0% of the outer surface area of the tube 10.

The damping members 30 arranged in the circumferential direction based on the outer surface area of the tube 10 serves to transmit energy and perform damping by contacting the tube 10 and the external ring 20, so it may be advantageous to transmit vibrations occurring in the tube 10 through a wide area, which, however, may be determined by considering a displacement change due to the vibrations of the damping member 30 itself.

The damping member 30 does not need to be applied to all surfaces of the tube 10 but is applied so that the damping member 30 is in contact with an area of 0.3 to 1.0% of the outer surface area of the tube 10, which is economically efficient and may also effectively control relative displacement locally.

The damping member 30 may be located between the external ring 20 and the tube 10, while acting as a damper, and the area may vary depending on the design degree of the damping ratio to be satisfied by using the damping member 30 and is not limited to the aforementioned area.

The tube vibration damping structure according to the present disclosure may further include a fixing member 40 coupled to a fixing recess 31 formed in the damping member 30 on the outside of the external ring 20 through a through-hole 21 penetrating the external ring 20.

The external ring 20 may include the through-hole 21 penetrating therethrough in a thickness direction so that a fixing member 40 may be coupled. In addition, the damping member 30 located between the tube 10 and the external ring 20 may be formed with the fixing recess 31 into which the fixing member 40 may be inserted without penetrating through in the thickness direction from a surface close to the external ring 20. Accordingly, the fixing member 40 may be configured to pass through the through-hole 21 from the outside of the external ring 20 and be coupled to the fixing recess 31.

Screw threads may be formed on the outside of the fixing member 40, so the shape formed on the inside of the through-hole 21 or the fixing recess 31 may be a shape corresponding to the screw threads of the fixing member 40. Alternatively, the fixing member 40 may be press-fitted into the through-hole 21 and the fixing recess 31 and may not be easily removed.

The structure of the fixing member 40, the through-hole 21, and the fixing recess 31 is not limited to the aforementioned coupling structure and includes all structures that may be implemented by a person skilled in the art.

According to an embodiment of the present disclosure, the fixing member 40 may be fixed, while applying pressure to the damping member 30. In addition, the pressure applied by the fixing member 40 to the damping member 30 may be less than the strength of the damping member 30. This is because, if a pressure greater than the strength of the damping member 30 is applied, the damping member 30 may be damaged.

As an example, the pressure applied by the fixing member 40 to the damping member 30 may be 40 to 60% of the strength of the damping member 30. When the fixing member 40 applies pressure to the damping member 30, the pressure may be applied at about 40 to 60% of the strength of the damping member 30, so that the damping member 30 may not be damaged, while the external ring 20, the damping member 30, and the tube 10 are fixed without being separated, and by applying the pressure as described above, internal vibrations may be easily transmitted to the damping member 30 and the external ring 20 and there may be room for some deformation.

In a case in which the fixing member 40 is formed in a shape, such as a screw, the transmitted pressure may be controlled by determining the number of rotations. In the case of other shapes, the transmitted pressure may be controlled by adjusting coupling force.

According to an embodiment of the present disclosure, the auxiliary member 50 located between the external ring 20 and the damping member 30 may be further included.

The auxiliary member 50 is a component added to control local pressure on the surface in which the damping member 30 and the fixing member 40 meet. When the damping member 30 deforms according to pressure, the auxiliary member 50 may play a role in filling a gap with the external ring 20. Or, the auxiliary member 50 may play a role in assisting the rigidity of the damping member 30.

The auxiliary member 50 may be formed in a plate shape as an example.

The auxiliary member 50 includes an auxiliary hole 51 penetratingly formed and located in a line with the through-hole 21 of the external ring 20 and the fixing recess 31 of the damping member 30, so that the fixing member 40 may be coupled to the auxiliary hole 51 of the auxiliary member 50. That is, the damping member 30, the auxiliary member 50, and the external ring 20 may be formed to be stacked and fixed in this order.

If the pressure transmitted by the fixing member 40 increases, the size of the fixing member 40 itself may be increased so that the pressure may be sufficiently controlled. However, there may be conditions in which it may be structurally difficult to increase the size of the fixing member 40 due to conditions, such as the width of the external ring 20 or it may be economically inefficient.

Therefore, in order to solve the problem, the auxiliary member 50 may be additionally included between the damping member 30 and the external ring 20, which is the surface in which the damping member 30 and the fixing member 40 meet. Through the auxiliary member 50, local pressure applied by the fixing member 40 to the damping member 30 may be controlled and excessive pressure may be prevented from being applied to the damping member 30 with a narrow area.

The auxiliary member 50 is not limited to a plate-shaped member and includes all types of structures that disperse and efficiently transmit the pressure applied to the damping member 30.

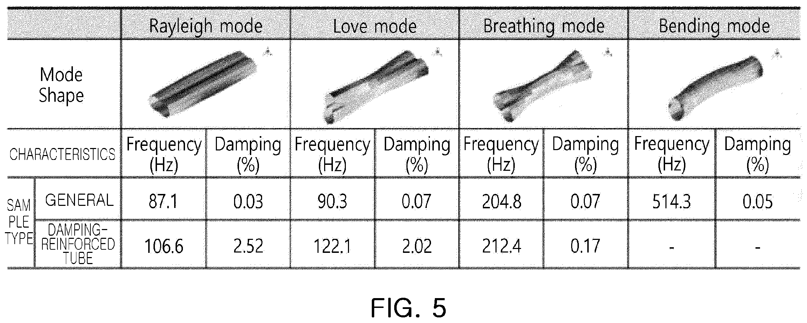

FIG. 5 illustrates experimental results of a frequency and damping degree of each vibration mode for a general tube and a tube based on a tube vibration damping structure according to the present disclosure.

The tube 10 was set to a shape of 2.5 m in diameter, 16 mm in thickness, and 16 m in length, and the results were derived as a vibration modal analysis s that analyzes whether the structure resonates by identifying the natural frequency of the structure and the shape of the vibration at that frequency.

The vibration mode of the tube 10 may be classified into Rayleigh Mode, Love Mode, Breathing Mode, and Bending Mode.

Since the natural frequency of the tube 10 with 3 degrees of freedom is 3, the result values from a first mode to a third mode were derived in order of the lowest natural frequency. Referring to FIG. 5, only the result values of the first mode were compared.

As for sample type, the existing tube was indicated as general tube, and the tube 10 including a tube vibration damping structure according to an embodiment of the present disclosure was indicated as a damping-reinforced tube.

As can be seen in FIG. 5, the results show that the damping ratio of the damping-reinforced tube is significantly greater.

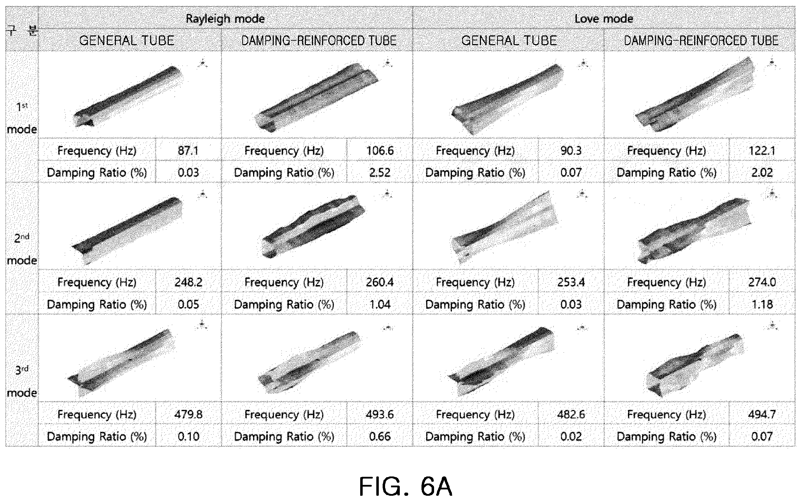

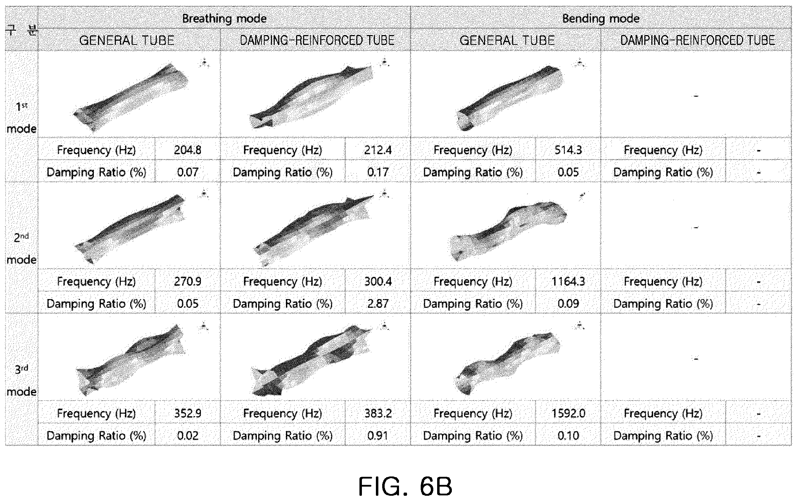

FIG. 6a and FIG. 6b show the shapes of the general tube and the damping-reinforced tube according to their natural modes by vibration mode, and the natural frequencies and damping ratios thereof.

Since the bending mode is independent of a case in which a vibration direction is a circumferential direction, it can be seen that the damping ratio is significantly improved in the damping-reinforced tube compared to the general tube in all modes except the bending mode mode. This is a common result for the first mode to the third mode.

In order to confirm the effect of the entire tube system formed by connecting multiple tubes, a system formed by arranging multiple tubes 10 as in an embodiment of the present disclosure may be assumed. For example, a tube structure of a total of 80 m may be assumed by connecting five tubes having a diameter of 2.5 m, a thickness of 16 mm, and a length of 16 m.

At this time, it may be assumed that the both end portions of the unconnected and open tube connection structure are referred to as E1 and E2, respectively, the vehicle travels from E1 to E2 at a speed of 1,000 km/h inside the tube, and the weight of the vehicle is 10 kN. The connected portions between the tubes are sequentially indicated as P1 to P4 in a traveling direction of the vehicle, and P3 is assumed as a fixed end and other points are assumed as movable ends as boundary conditions.

Table 1 below is a table of response values by position according to a change in damping ratio by major frequency, and only major values are shown as the results of vibration analysis under the conditions.

The points at which the response values of the acceleration response and displacement response in a time domain were large, i.e., the points at which the frequencies were 12.8 and 15.2 Hz, were set as the major frequencies at frequencies. In addition, the values of the acceleration response and displacement response in the frequency domain at the corresponding frequencies were indicated as representative values, and the damping ratio was indicated as DR in Table 1. The response ratio is the ratio of the response value when the damping ratio is 1.0% to the response value when the damping ratio is 0.1%.

**[Table 1]**

| Frequency (Hz) | | 12.8 | | | | 15.2 | | | |
|---|---|---|---|---|---|---|---|---|---|
| Position | | P1 | P2 | P3 | P4 | P1 | P2 | P3 | P4 |
| Acclera tion respons e (m/sec² ) | DR=0.1% | 1.522 | 1.013 | 0.026 | 1.1549 | 1.462 | 0.536 | 0.947 | 1.503 |
| | DR=1.0% | 0.465 | 0.310 | 0.005 | 0.479 | 0.407 | 0.142 | 0.268 | 0.433 |
| Response ratio | | 0.31 | 0.31 | 0.18 | 0.31 | 0.28 | 0.26 | 0.28 | 0.29 |
| Displac ement respons e (mm) | DR=0.1% | 0.233 | 0.156 | 0.0037 | 0.241 | 0.158 | 0.059 | 0.104 | 0.164 |
| | DR=1.0% | 0.072 | 0.048 | 0.0007 | 0.074 | 0.045 | 0.016 | 0.029 | 0.047 |
| Response ratio | | 0.31 | 0.31 | 0.20 | 0.31 | 0.28 | 0.27 | 0.28 | 0.29 |

As a result of examining the response of the tube due to the driving of the vehicle at total four points, P1 and P4 at the end portions and P2 and P3 formed in the central portion, it can be seen that the displacement response and acceleration response decrease as the damping ratio increases.

According to Table 1 above, as the damping ratio increases from 0.1% to 1.0%, the response ratio becomes 0.18 to 0.31, so a reduction ratio of the response is about 69% to 82%.

That is, as the damping ratio increases, the value of the vibration response decreases and the vibration is significantly improved, so that the influence of the vibration may be reduced.

In the case of the tube 10 including a tube vibration damping structure according to an embodiment of the present disclosure, the problem that the vehicle generates a considerable amount of vibrations as the speed increases due to a gap between the vehicle and a guide rail acts as a constant unevenness may be solved by increasing the damping ratio.

In order to reduce frictional resistance, one of the driving resistances in the entire tube system, a magnetic levitation system is used, and a constant gap between the guide rail and the vehicle may be maintained by converting attraction and repulsion of the magnetic field precisely and periodically within the tube, thereby maintaining the magnetic levitation system with suction force. At this time, the control of the circumferential vibrations may help maintain the magnetic levitation system.

The tube vibration damping structure according to an embodiment of the present disclosure may also be applied to a case in which the magnetic levitation system is maintained using an electrodynamic repulsive force, and the effect is the same even when the magnetic levitation system is maintained using the electrodynamic repulsive force.

That is, the tube vibration damping structure according to an embodiment of the present disclosure has a significantly improved damping ratio and efficiently controls the circumferential vibrations compared to the existing tube, thereby providing the effect of easily maintaining the magnetic levitation system.

Although the present disclosure has been described above with reference to the embodiments, the present disclosure is not limited to the embodiments described above, and it is obvious that the present disclosure may be modified and implemented by a person skilled in the art without changing the technical idea of the present disclosure claimed in the claims.

### [Description of reference numerals]

10: tube
20: external ring
30: damping member
40: fixing member
50: auxiliary member
W: external ring width
D: external ring thickness

## Claims

1. A tube vibration damping structure comprising:
a tube for moving a vehicle in which a low pressure is formed;
an external ring installed on the outside of the tube; and
one or more damping members arranged between the external ring and the tube.

2. The tube vibration damping structure of claim 1, wherein
the external ring has a through-hole penetratingly formed in a thickness direction,
the damping member is formed with a fixing recess formed in the thickness direction on a surface close to the external ring, and
a fixing member coupled to the through-hole and the fixing recess on the outside of the external ring is further included.

3. The tube vibration damping structure of claim 2, further comprising an auxiliary member located between the external ring and the damping member.

4. The tube vibration damping structure of claim 1, wherein the external ring is formed of steel.

5. The tube vibration damping structure of claim 1, wherein a thickness of the external ring is 2 to 4 times a thickness of the tube.

6. The tube vibration damping structure of claim 1, wherein the external ring is installed to be spaced apart by a distance of 3 to 5% of an outer diameter of the tube.

7. The tube vibration damping structure of claim 1, wherein a width of the external ring is 2 to 5% of a length of the tube.

8. The tube vibration damping structure of claim 1, wherein an elastic modulus of the damping member is 0.001 to 0.01 times an elastic modulus of the tube.

9. The tube vibration damping structure of claim 1, wherein a loss factor of the damping member is 100 to 200 times that of the tube.

10. The tube vibration damping structure of claim 1, wherein a sum of areas in which the damping member meets the tube in a state in which the damping member is disposed is 0.3 to 1.0% of an external surface area of the tube.

11. The tube vibration damping structure of claim 2, wherein pressure applied by the fixing member to the damping member is 40 to 60% of a strength of the damping member.

12. The tube vibration damping structure of claim 11, wherein the strength of the damping member is 0.01 to 0.1 times a strength of the external ring.

13. The tube vibration damping structure of claim 1, wherein the external ring is located in at least one of a central portion of the tube and both end portions of the tube.

14. The tube vibration damping structure of claim 1, wherein the damping member is provided in plural, and the plurality of damping members and is arranged at regular intervals in a circumferential direction of the tube.
